# EUROPEAN PATENT APPLICATION

(11) **EP 4 844 409 A1**
(43) Date of publication of application: **25.11.2026**
(21) Application number: 24918647.9
(22) Date of filing: 31.10.2024
(51) Int. Cl.: G01N 35/00, G01N 35/02

(54) **AUTOMATIC ANALYSIS APPARATUS, DIAGNOSIS SYSTEM, AND DIAGNOSIS METHOD**

(30) Priority: 15.01.2024 JP 2024004196
(71) Applicant: Hitachi High-Tech Corporation, Minato-ku Tokyo 105-6409 (JP)
(72) Inventor: SUGINO Fumiya, Tokyo 105-6409 (JP); KOURAI Yuusuke, Tokyo 105-6409 (JP); ZHOU Guangbin, Tokyo 105-6409 (JP); SUZUKI Yoichiro, Tokyo 105-6409 (JP)
(74) Representative: MERH-IP Matias Erny Reichl Hoffmann Patentanwälte PartG mbB
(86) International application number: PCT/JP2024/038804
(87) International publication number: WO 2025/154360

(57) **Abstract**

To provide an automatic analyzer including an ultrasonic transducer including a piezoelectric body and an electrode attached to the piezoelectric body; and a controller configured to perform failure diagnosis for the ultrasonic transducer, in which the controller is configured to define and store a normal range of an electrical impedance unique to the ultrasonic transducer based on a measurement value of the electrical impedance obtained by applying a voltage to the electrode, and compare the measurement value of the electrical impedance obtained by applying the voltage to the electrode during the diagnosis with the normal range to perform the failure diagnosis for the ultrasonic transducer.

## Description

### Technical Field

The present invention relates to an automatic analyzer including an ultrasonic transducer, and a diagnostic system and a diagnostic method for diagnosing whether the ultrasonic transducer of the automatic analyzer is normal or abnormal.

### Background Art

In an automatic analyzer, a sample and a reagent are dispensed into a reaction cell and mixed to react, and a specific component contained in the sample is quantitatively analyzed from absorbance of a liquid after the reaction. For the mixing of the sample and the reagent, there is a non-contact method using ultrasonic waves, in addition to a method of directly mixing the liquid in the reaction cell with a mixing rod. The non-contact mixing using ultrasonic waves is useful for avoiding contamination of the sample and the reagent, and is used in some automatic analyzers. Meanwhile, a failure of an ultrasonic transducer that generates ultrasonic waves directly leads to a decrease in accuracy and reproducibility of a component analysis.

In regard to this, Patent Literature 1 discloses a method of diagnosing a failure of an ultrasonic transducer from an electrical impedance spectrum of the ultrasonic transducer.

### Citation List

### Patent Literature

PTL 1: JP2022-177414A

### Summary of Invention

### Technical Problem

In Patent Literature 1, a normal population is generated in advance from a large number of normal ultrasonic transducers for an electrical impedance, and a normal range defined from the normal population and a measurement value during diagnosis are compared to perform failure diagnosis for the ultrasonic transducer.

The measurement value of the electrical impedance of the ultrasonic transducer in the automatic analyzer also varies due to influence factors other than the failure. For example, even in a case of corresponding ultrasonic transducers of automatic analyzers of the same type, the measurement value of the electrical impedance differs depending on a length of a wiring connected to an electrode, a routing path of the wiring, and an individual difference of the ultrasonic transducer. In the related art including the technique of Patent Literature 1, a normal range is defined for each of electrodes of an ultrasonic transducer based on a large number of data obtained by a plurality of automatic analyzers, and the normal range is shared for failure diagnosis for ultrasonic transducers of a plurality of automatic analyzers under control. However, this normal range is a value obtained by statistics without considering an influence of various factors that affect the measurement value of the electrical impedance such as the length of the wiring as described above. Therefore, as a result of verification by inventors of the present application, it has been found that a normal ultrasonic transducer may be diagnosed as abnormal by the automatic analyzer, and there is room for improvement in diagnostic accuracy. When it is determined that the normal ultrasonic transducer is abnormal, originally unnecessary replacement of the ultrasonic transducer is performed, an operation rate of the automatic analyzer decreases, and the number of work steps and component costs required for the replacement may increase more than necessary.

An object of the invention is to provide an automatic analyzer, a diagnostic system, and a diagnostic method capable of improving reliability in failure diagnosis for an ultrasonic transducer.

### Solution to Problem

In order to achieve the above object, the invention provides an automatic analyzer including an ultrasonic transducer including a piezoelectric body and an electrode attached to the piezoelectric body; and a controller configured to: perform failure diagnosis for the ultrasonic transducer, in which the controller is configured to: define and store a normal range of an electrical impedance unique to the ultrasonic transducer based on a measurement value of the electrical impedance obtained by applying a voltage to the electrode; compare the measurement value of the electrical impedance obtained by applying the voltage to the electrode during the diagnosis with the normal range; and perform the failure diagnosis for the ultrasonic transducer.

### Advantageous Effects of Invention

According to the present invention, reliability in the failure diagnosis for the ultrasonic transducer of the automatic analyzer can be improved.

### Brief Description of Drawings

[FIG. 1] FIG. 1 is a schematic diagram of a diagnostic system according to an embodiment of the invention.
[FIG. 2] FIG. 2 is a schematic diagram showing a cross-section of an ultrasonic mixing mechanism provided in the automatic analyzer and a drive system of the ultrasonic mixing mechanism according to the embodiment of the invention.
[FIG. 3] FIG. 3 is a diagram illustrating a difference between electrical impedance spectra of a normal ultrasonic transducer and an ultrasonic transducer in which a failure occurs.
[FIG. 4] FIG. 4 is a diagram illustrating a normal range used in failure diagnosis for the ultrasonic transducer in the embodiment of the invention.
[FIG. 5] FIG. 5 is a diagram illustrating the failure diagnosis for the ultrasonic transducer using the normal range in the embodiment of the invention.
[FIG. 6] FIG. 6 is a diagram illustrating timings when a normal range of an electrical impedance of the ultrasonic transducer is defined and when the ultrasonic transducer is diagnosed in the embodiment of the invention.
[FIG. 7] FIG. 7 is a flowchart showing an example of a series of processing procedures of a controller related to the definition of the normal range in the embodiment of the invention.
[FIG. 8] FIG. 8 is a flowchart showing an example of a series of processing procedures of the controller related to the failure diagnosis for the ultrasonic transducer in the embodiment of the invention.
[FIG. 9] FIG. 9 is an example of diagnosis results of the ultrasonic transducers output by the controller to a display unit in the embodiment of the invention.
[FIG. 10] FIG. 10 is a diagram illustrating the normal range used for the failure diagnosis for the ultrasonic transducer in a modification.

### Description of Embodiments

Hereinafter, an embodiment of the invention will be described with reference to the drawings. In the following description, the same or corresponding elements in the drawings are denoted by the same reference numerals, and redundant description will be omitted as appropriate.

### (Diagnostic system)

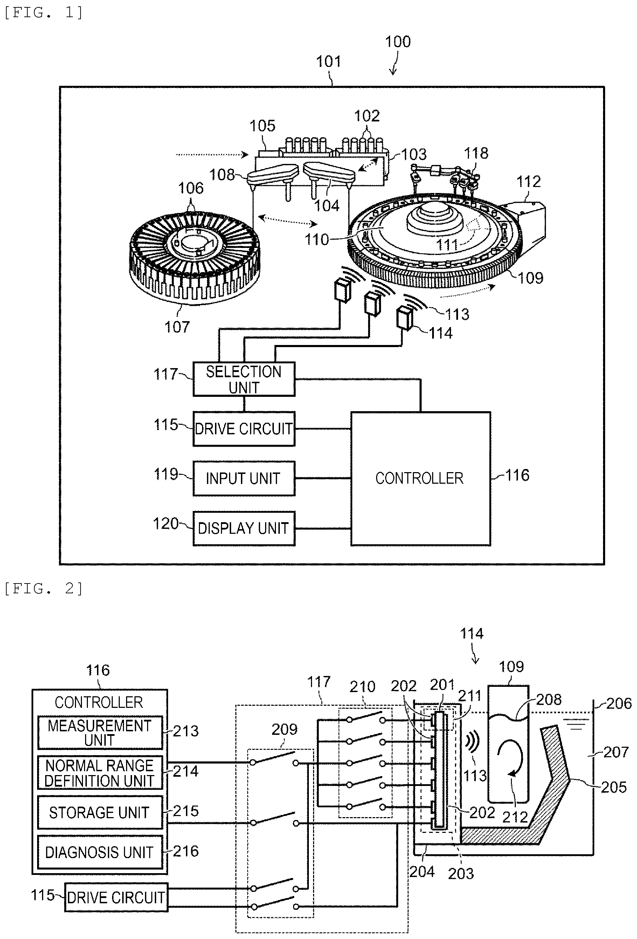

FIG. 1 is a schematic diagram of a diagnostic system according to an embodiment of the invention. A diagnostic system 100 shown in FIG. 1 includes a controller 116 that performs failure diagnosis for an ultrasonic transducer 203 (FIG. 2) provided in an automatic analyzer 101. The controller 116 is a computer including an arithmetic device such as a CPU and a storage device such as a RAM, a ROM, an HHD, or an SSD. In FIG. 1, a configuration in which the controller 116 is provided in the automatic analyzer 101 will be described as an example. That is, in the present embodiment, a computer provided in the automatic analyzer 101 also serves as the controller 116 of the diagnostic system 100, in other words, the controller 116 having a diagnosis function of the ultrasonic transducer 203 (FIG. 2). However, the controller 116 of the diagnostic system 100 may be a computer (a reservoir or the like) connected to the automatic analyzer 101 via a network such as the LAN or the Internet.

### (Configuration of Automatic Analyzer)

The automatic analyzer 101 shown in FIG. 1 includes a sample transport line 105, a reaction disk 110, a reagent disk 107, a sample dispensing mechanism 104, a reagent dispensing mechanism 108, an ultrasonic mixing mechanism 114, a light source 111, an absorbance meter 112, a washing mechanism 118, a drive circuit 115, a selection unit 117, an input unit 119, a display unit 120, and a controller 116.

The sample transport line 105 is a device that moves a sample rack 103 to the sample dispensing mechanism 104. A plurality of sample cups 102 are installed in the sample rack 103. Each of the sample cups 102 contains a sample to be analyzed, such as blood or urine.

In the reaction disk 110, a plurality of reaction cells 109 are arranged in a circumferential direction to form an annular shape. A sample and a reagent are dispensed into each of the reaction cells 109. A plurality of reagent bottles 106 are installed in the reagent disk 107. Each of the reagent bottles 106 accommodates a reagent to be mixed with the sample. The sample dispensing mechanism 104 dispenses the sample from the sample cup 102 to the reaction cell 109 on the reaction disk 110. The reagent dispensing mechanism 108 dispenses the reagent from the reagent bottle 106 on the reagent disk 107 to the same reaction cell 109 on the reaction disk 110. The ultrasonic mixing mechanism 114 mixes a mixed solution of the sample and the reagent dispensed into the reaction cell 109 with ultrasonic waves 113 to promote a reaction between the sample and the reagent. The mixed solution of the sample and the reagent is also referred to as a reaction solution.

The light source 111 irradiates the reaction cell 109 with light. The absorbance meter 112 disperses light that has passed through the reaction solution inside the reaction cell 109 and measures absorbance. The measured absorbance is input to the controller 116, and a specific component contained in the sample is quantitatively analyzed in the controller 116. The washing mechanism 118 washes the reaction cell 109 in which the analysis of the sample is completed.

The drive circuit 115 applies a voltage for the ultrasonic mixing mechanism 114 to emit the ultrasonic waves 113. The selection unit 117 selectively switches a circuit connection of the ultrasonic mixing mechanism 114 to the drive circuit 115 or the controller 116. The input unit 119 is an external interface, and an operator such as a user can access the controller 116 by operating the input unit 119. The display unit 120 is a monitor that displays an operation screen of the controller 116, a notification, an alarm, or the like output from the controller 116.

### (Operation of Automatic Analyzer)

In the automatic analyzer 101 having the above configuration, the sample and the reagent are dispensed from the sample cup 102 and the reagent bottle 106 to the same reaction cell 109 by the sample dispensing mechanism 104 and the reagent dispensing mechanism 108, respectively. The mixed solution of the sample and the reagent is mixed by the ultrasonic mixing mechanism 114. In the present embodiment, the mixed solution of the sample and the reagent is an object to be mixed by the ultrasonic mixing mechanism 114 and thus described as a to-be-mixed solution. In the present embodiment, the reaction disk 110 rotates counterclockwise in a plan view. As the reaction disk 110 rotates, the reaction cells 109, each containing the to-be-mixed solution, are sequentially transported to a front of the ultrasonic mixing mechanism 114, and the to-be-mixed solution is mixed and mixed in a non-contact manner by the ultrasonic mixing mechanism 114. The reaction cell 109, in which the mixing of the to-be-mixed solution is interfered with, is transported between the light source 111 and the absorbance meter 112 by the rotation of the reaction disk 110, and absorbance of the to-be-mixed solution, that is, a reaction solution is measured. The reaction cell 109, in which a measurement of the absorbance of the to-be-mixed solution is completed, is transported to a position of the washing mechanism 118 by the rotation of the reaction disk 110, and is washed by the washing mechanism 118. Another sample is dispensed from the sample cup 102 to the reaction cell 109, in which the washing is interfered with, by the sample dispensing mechanism 104, and a series of sequences described above is repeated. These sequence operations are performed in parallel for a plurality of samples.

### (Ultrasonic Mixing Mechanism)

FIG. 2 is a schematic diagram showing a cross-section of the ultrasonic mixing mechanism 114 and the drive system thereof. The cross-section of the ultrasonic mixing mechanism 114 shown in FIG. 2 is a cross-section of the ultrasonic mixing mechanism 114 taken along a vertical plane passing through a rotation center of the reaction disk 110.

The ultrasonic mixing mechanism 114 includes the ultrasonic transducer 203, a fixing table 204, and a reflection plate 205. The ultrasonic transducer 203 includes a piezoelectric body 201 and a plurality of electrodes 202 attached to the piezoelectric body 201. The electrodes 202 are arranged in an upper-lower direction and attached to the piezoelectric body 201 such that the piezoelectric body 201 is interposed. The fixing table 204 supports the ultrasonic transducer 203, and the ultrasonic transducer 203 is installed in a case of the automatic analyzer 101. The reflection plate 205 is disposed to face the ultrasonic transducer 203.

The automatic analyzer 101 includes a doughnut-shaped reaction vessel 206 in which a heat-retaining solvent 207 is stored. The ultrasonic mixing mechanism 114 is installed in the reaction vessel 206. The reaction cell 109 in which a to-be-mixed solution 208 is stored moves with the rotation of the reaction disk 110 in a state of being inserted into the reaction vessel 206 and immersed in the heat-retaining solvent 207, and is transported between the ultrasonic transducer 203 and the reflection plate 205 in order to mix the to-be-mixed solution 208.

The ultrasonic transducer 203 is connected to the controller 116 or the drive circuit 115 via the selection unit 117. The selection unit 117 includes a circuit connection changeover switch 209 and a segment changeover switch 210. The circuit connection changeover switch 209 switches a connection partner of the ultrasonic transducer 203 to the drive circuit 115 or the controller 116. Further, the ultrasonic transducer 203 is divided into a plurality of segments 211 arranged in the upper-lower direction. Each of the segments 211 includes at least one electrode 202 (one in the present embodiment) having the same shape on one surface or both surfaces of the piezoelectric body 201, and each of the segments 211 emits the ultrasonic waves 113. The segment changeover switch 210 selects the electrode 202 to be applied with a voltage and selects the segment 211 for emitting the ultrasonic waves 113. Since the ultrasonic transducer 203 has such a segment structure, even if a liquid level of the to-be-mixed solution 208 inside the reaction cell 109 differs depending on analysis items, a segment for emitting the ultrasonic waves 113 that effectively acts on the mixing of the to-be-mixed solution 208 can be selected. For example, a relay or a multiplexer can be used as the circuit connection changeover switch 209 or the segment changeover switch 210.

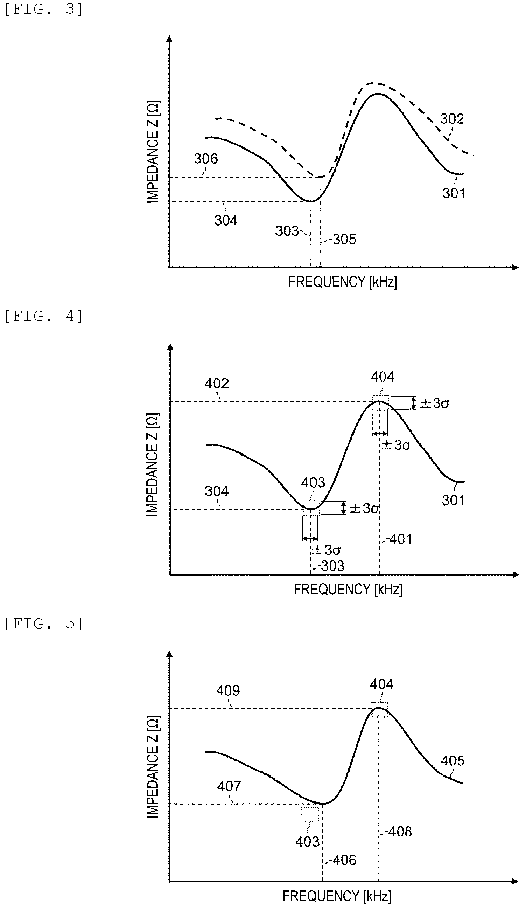

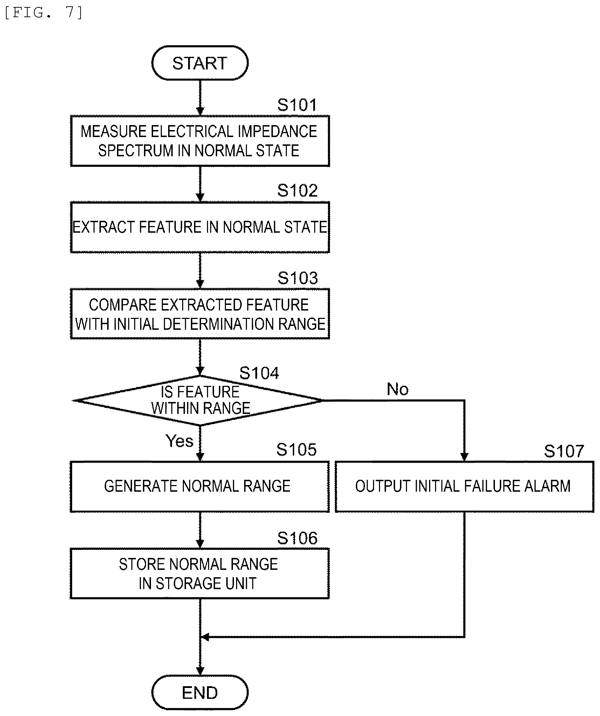

The controller 116 includes a measurement unit 213 that measures an electrical impedance spectrum, a normal range definition unit 214 to be described in detail with reference to FIG. 4, a storage unit 215 to be described in detail with reference to FIG. 7, and a diagnosis unit 216 that performs the failure diagnosis for the ultrasonic transducer 203. The measurement unit 213, the normal range definition unit 214, the storage unit 215, and the diagnosis unit 216 are functions of the controller 116, and may be implemented by hardware elements such as circuits or software elements such as programs.

### (Ultrasonic Mixing Operation)

When the ultrasonic transducer 203 is connected to the drive circuit 115 via the circuit connection changeover switch 209 and the segment changeover switch 210 and a voltage is applied to the ultrasonic transducer 203 by the drive circuit 115, the ultrasonic waves 113 are generated in the segment 211 connected to the drive circuit 115. The generated ultrasonic waves 113 pass through the heat-retaining solvent 207 and the to-be-mixed solution 208 inside the reaction cell 109, propagate to the reflection plate 205, are reflected by the reflection plate 205, and pass through the to-be-mixed solution 208 inside the reaction cell 109 again. At this time, since an acoustic flow is generated in a propagation direction of the ultrasonic waves 113, a swirling flow 212 is generated in the to-be-mixed solution 208 by the ultrasonic waves 113 transmitted from the ultrasonic transducer 203 through the to-be-mixed solution 208 and directed to the reflection plate 205 and the ultrasonic waves 113 reflected by the reflection plate 205 to change an angle thereof and transmitted through the to-be-mixed solution 208. The swirling flow 212 is thus generated in the to-be-mixed solution 208, and thereby the sample and the reagent are mixed.

By the segment changeover switch 210 selecting the segment 211 to be connected to the drive circuit 115, the ultrasonic waves 113 can be emitted from any of the segments 211.

### (Impedance Measurement Operation)

The failure diagnosis for the ultrasonic transducer 203 is performed by measuring an electrical impedance spectrum of the ultrasonic transducer 203. As will be described in detail later, in the controller 116, a normal range of the electrical impedance unique to the ultrasonic transducer 203 is defined as described later based on a measurement value of the electrical impedance obtained by applying a voltage to the electrode 202, and is stored in the storage unit 215. Then, during subsequent diagnosis (for example, before an analysis of the sample), the controller 116 compares the measurement value of the electrical impedance obtained by applying the voltage to the electrode 202 with the normal range to perform the failure diagnosis for the ultrasonic transducer 203. The ultrasonic transducer 203 used for defining the normal range is the same individual as the ultrasonic transducer 203 subjected to the failure diagnosis.

The electrical impedance spectrum used for the failure diagnosis is measured by the measurement unit 213 of the controller 116 by connecting the ultrasonic transducer 203 to the controller 116 via the circuit connection changeover switch 209 and the segment changeover switch 210 and applying a voltage lower than that applied by the drive circuit 115 to the ultrasonic transducer 203. The electrical impedance spectrum is acquired from an electrical response obtained by sweeping a voltage of any frequency. When measuring the electrical impedance spectrum, frequency characteristics of a phase difference between a voltage and a current can also be measured. A voltage of any frequency can be generated by, for example, a direct digital synthesizer.

Similarly to the ultrasonic mixing operation, in the impedance measurement operation, the electrical impedance spectrum of each of the segments 211 can be measured, by the segment changeover switch 210 switching the segment 211 to be connected to the controller 116.

### (Change in Electrical Impedance)

FIG. 3 is a diagram illustrating a difference between electrical impedance spectra of the normal ultrasonic transducer 203 and the ultrasonic transducer 203 in which a failure occurs. An electrical impedance spectrum indicated by a solid line in FIG. 3 is an electrical impedance spectrum 301 of the normal ultrasonic transducer 203. An electrical impedance spectrum indicated by a broken line is an electrical impedance spectrum 302 of the ultrasonic transducer 203 in which a failure occurs. The electrical impedance spectrum of the ultrasonic transducer 203 has a minimum value (minimum electrical impedance) at a resonant frequency. Since a vibration displacement of the ultrasonic transducer 203 is large when a voltage of a resonant frequency 303 is applied, the ultrasonic transducer 203 is generally used at a frequency near the resonant frequency. As shown in FIG. 3, a resonant frequency 305 at the time of the failure of the ultrasonic transducer 203 changes from the resonant frequency 303 at a normal time. An electrical impedance 306 of the ultrasonic transducer 203, in which a failure occurs, at the resonant frequency 305, is larger than a minimum electrical impedance 304 of the normal ultrasonic transducer 203 at the resonant frequency 303. Therefore, normal ranges for the resonant frequency and the electrical impedance at the resonant frequency can be set, and the failure diagnosis for the ultrasonic transducer 203 can be performed.

At this time, in addition to the failure of the ultrasonic transducer 203, a measurement environment such as a length (wiring path) and a shape of an electrical wiring from the measurement unit 213 to the ultrasonic transducer 203 may affect a measurement value of the electrical impedance. In particular, when the electrical wiring is long, the measurement value of the electrical impedance is small. Therefore, in a diagnostic method of comparing the measurement value of the electrical impedance with a general-purpose normal range, whether a cause of the measurement value of the electrical impedance being smaller than the normal range is the failure of the ultrasonic transducer 203 or the electrical wiring of the ultrasonic transducer 203 being long cannot be determined. Therefore, a method of defining a normal range excluding influence factors on the measurement value of the electrical impedance other than the failure of the ultrasonic transducer 203 and performing the failure diagnosis for the ultrasonic transducer 203 based on comparison between the normal range and the measurement value of the electrical impedance during the diagnosis is effective.

In the present embodiment, the failure diagnosis excluding the influence factors on the measurement value of the electrical impedance other than the failure of the ultrasonic transducer 203 is implemented by defining the normal range by the normal range definition unit 214. The influence factors are excluded by defining the normal range and performing the failure diagnosis in the same system. The "system" herein means a system related to the measurement of the electrical impedance, and includes the measurement unit 213, the ultrasonic transducer 203, the electrical wiring connecting the measurement unit 213 and the ultrasonic transducer 203, and the like. The same system means that the ultrasonic transducer 203 and the electrical wiring thereof are the same during the definition of the normal range and during the diagnosis. When the measurement unit 213 is implemented by hardware, it is desirable that the measurement units 213 are also the same. When the measurement unit 213 is implemented by software, it is desirable that identity of the programs and the like is secured. In the present embodiment, factors excluded as the influence factors on the measurement value of the electrical impedance of the ultrasonic transducer 203 are, for example, an individual difference of the ultrasonic transducer used for measuring the electrical impedance value when the normal range is defined and the ultrasonic transducer subjected to the failure diagnosis, the length of the electrical wiring, the shape (wiring path) of the electrical wiring, and the like.

### (Example of Definition of Normal Range)

FIG. 4 is a diagram illustrating the normal range used in the failure diagnosis for the ultrasonic transducer 203. The normal range is defined by the normal range definition unit 214 of the controller 116. First, a voltage is applied to a predetermined one of the electrodes 202 of the normal ultrasonic transducer 203 by the measurement unit 213, and the electrical impedance spectrum 301 is measured for the electrode 202. It is assumed that the ultrasonic transducer 203 used when defining the normal range is in a normal state. Based on a measurement value on the electrical impedance spectrum 301 obtained from the normal ultrasonic transducer 203, a normal range of the electrical impedance unique to the predetermined electrode 202 of the ultrasonic transducer 203 is defined. The normal range is defined based on features extracted from the electrical impedance spectrum 301.

The resonant frequency 303 of the ultrasonic transducer 203 and the minimum electrical impedance 304 at the resonant frequency 303 are used as a feature for defining the normal range. Further, an impedance on the electrical impedance spectrum 301 is maximized at a frequency higher than the resonant frequency 303. The frequency at which the impedance on the electrical impedance spectrum 301 has a maximum value is referred to as an anti-resonant frequency 401. In the present embodiment, the anti-resonant frequency 401 of the normal ultrasonic transducer 203 and a maximum electrical impedance 402 at the anti-resonant frequency 401 are used as a second feature.

Further, the controller 116 defines, by the normal range definition unit 214, the normal range from a variation in the feature (resonant frequency 303 or the like) extracted as described later for each electrical impedance spectrum obtained by a plurality of measurements using the electrode 202. For example, a method of repeatedly measuring the electrical impedance a predetermined number of times N (for example, 20 times), obtaining a standard deviation σ of N features obtained by the repeated measurements, and setting an average value of the features ± 3σ as the normal range can be exemplified. ± 3σ is obtained for each of the resonant frequency 303, the minimum electrical impedance 304, the anti-resonant frequency 401, and the maximum electrical impedance 402.

The normal range includes a first normal range 403 in which a range of an average value of the minimum electrical impedance 304 ± 3σ and a range of an average value of the resonant frequency 303 corresponding to the minimum electrical impedance 304 ± 3σ are defined as features on a graph illustrated in FIG. 4 with the frequency and the impedance as axes. Further, in the present embodiment, the normal range includes a second normal range 404 in which a range of an average value of the maximum electrical impedance 402 ± 3σ and a range of an average value of the anti-resonant frequency 401 corresponding to the maximum electrical impedance 402 ± 3σ are defined as features. As the features for defining the normal range, in addition to the above, a value characterizing a waveform of the electrical impedance spectrum, such as a difference between the resonant frequency 303 and the anti-resonant frequency 401, or a difference between the minimum electrical impedance 304 and the maximum electrical impedance 402, may be used.

The normal ranges (the first normal range 403 and the second normal range 404) defined by the normal range definition unit 214 as described above are stored in the storage unit 215.

### (Another Example of Definition of Normal Range)

As described above, in a case where the normal range is defined from the variation of a plurality of measurement values of the electrical impedance using the same electrode 202, when measurement reproducibility is high and the standard deviation σ is small, the normal range is excessively narrowed, and a margin for the failure diagnosis may not be appropriately secured.

As described above, the ultrasonic transducer 203 includes a plurality of electrodes 202 having the same shape. The ultrasonic transducer 203 can utilize the segment structure, and the controller 116 can define the normal range from a variation of the feature (resonant frequency 303 or the like) extracted from the electrical impedance spectrum of each of the electrodes 202, that is, for each of the segments 211. In this case, the normal range can be defined in a shorter time than when the measurement is repeatedly performed for each segment 211.

### (Failure Diagnosis)

FIG. 5 is a diagram illustrating the failure diagnosis for the ultrasonic transducer 203 using the normal range defined by the normal range definition unit 214. After defining the normal range, as shown in FIG. 5, during the diagnosis for the ultrasonic transducer 203, the controller 116 measures a new electrical impedance spectrum 405 for the ultrasonic transducer 203, and compares a resonant frequency 406 related to the electrical impedance spectrum 405 and an electrical impedance 407 at the resonant frequency 406 with the first normal range 403. At the same time, the controller 116 compares an anti-resonant frequency 408 related to the electrical impedance spectrum 405 and an electrical impedance 409 at the anti-resonant frequency 408 with the second normal range 404. When the resonant frequency 406 and the electrical impedance 407 fall within the first normal range 403 and the anti-resonant frequency 408 and the electrical impedance 409 fall within the second normal range 404, the controller 116 diagnoses that the ultrasonic transducer 203 is in a normal state. Conversely, when the resonant frequency 406 and the electrical impedance 407 do not fall within the first normal range 403, or when the anti-resonant frequency 408 and the electrical impedance 409 do not fall within the second normal range 404, the controller 116 diagnoses that the ultrasonic transducer 203 is in a failure state. In the example of FIG. 5, coordinates defined by the resonant frequency 406 and the electrical impedance 407 are out of the first normal range 403, and it is determined that the ultrasonic transducer 203 related to the electrical impedance spectrum 405 is in a failure state.

### (Definition of Normal Range and Timing of Failure Diagnosis)

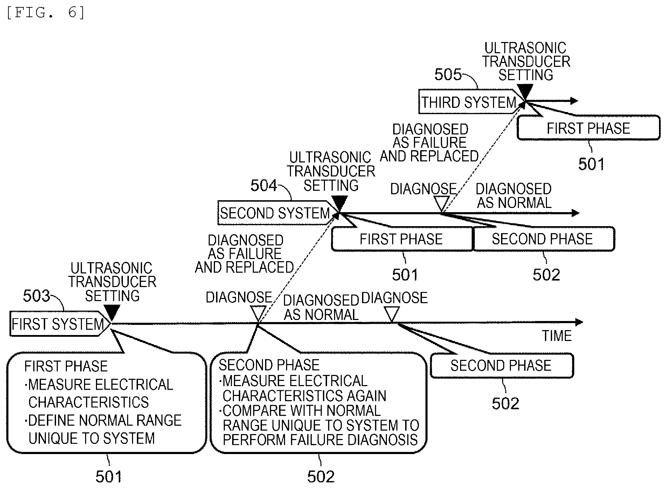

FIG. 6 is a diagram illustrating timings when the normal range of the electrical impedance of the ultrasonic transducer 203 is defined and when the ultrasonic transducer 203 is diagnosed. Phases related to diagnosis related to an operation of the ultrasonic transducer 203 are roughly divided into two phases, including a first phase 501 in which the normal range used for the failure diagnosis is defined from the electrical impedance spectrum of the ultrasonic transducer 203, and a second phase 502 in which the failure diagnosis for the ultrasonic transducer 203 is performed.

The first phase 501 is a timing at which the electrical impedance of the ultrasonic transducer 203 attached to the automatic analyzer 101 can be measured and a normal state of the ultrasonic transducer 203 is guaranteed. That is, the first phase 501 is a timing at which a new ultrasonic transducer 203 is soon to be assembled to the automatic analyzer 101, for example, a timing before the use of the ultrasonic transducer 203 is started for an analysis of a sample. For example, an example of the first phase 501 is a case where the ultrasonic transducer 203 is replaced with a new one before shipment of the automatic analyzer 101, before start of operation after delivery, or after start of operation. The normal range of the electrical impedance unique to the ultrasonic transducer 203 is defined based on the measurement value of the electrical impedance obtained at a timing when the normal state of the ultrasonic transducer 203 is estimated.

The second phase 502 is a timing at which a state of the ultrasonic transducer 203 is diagnosed in order to analyze the sample by the automatic analyzer 101. For example, an opportunity of the failure diagnosis for the ultrasonic transducer 203 performed before the analysis of the sample is an example of the second phase 502.

Whether the ultrasonic transducer 203 is in a normal state or a failure state is determined based on whether the feature extracted from the electrical impedance spectrum measured in the second phase 502 falls within or deviates from the normal range defined in the first phase 501. At this time, the electrical impedances in the first phase 501 and the second phase 502, which are compared with each other, are measured in the same system. This means that the ultrasonic transducer 203 is the same, the electrical wiring connecting the controller 116 and the ultrasonic transducer 203 is the same, and the measurement environment such as the wiring length and the wiring shape is physically the same during the definition of the normal range and during the diagnosis. Therefore, a fluctuation in the measurement value of the electrical impedance caused by factors other than the failure of the ultrasonic transducer 203, such as a difference in the measurement system such as the individual difference of the ultrasonic transducer 203 and the length and shape of the electrical wiring is prevented.

As shown in FIG. 6, when a failure occurs in the ultrasonic transducer 203 in a first system 503 and the ultrasonic transducer 203 is replaced with a new one, a system including the new ultrasonic transducer 203 is distinguished as a second system 504 different from the first system 503. In the present embodiment, every time the system changes in this way, the normal range unique to each system is defined in the first phase 501 for the corresponding system. A target of the failure diagnosis based on the normal range defined for the first system 503 is only the ultrasonic transducer 203 in the first system 503. Similarly, a target of the failure diagnosis based on the normal range defined for the second system 504 is only the ultrasonic transducer 203 in the second system 504, and a target of the failure diagnosis based on the normal range defined for a third system 505 is only the ultrasonic transducer 203 in the third system 505.

When a plurality of ultrasonic transducers 203 are mounted on the automatic analyzer 101, the plurality of ultrasonic transducers 203 are treated as different systems, and the normal range is individually defined for each of the plurality of ultrasonic transducers 203.

### (Processing Flow in First Phase)

FIG. 7 is a flowchart showing an example of a series of processing procedures of the controller 116 related to the definition of the normal range performed in the first phase. As described above, the first normal range 403 and the second normal range 404 are defined by the first phase 501 in which a normal state of the ultrasonic transducer 203 is guaranteed. For example, the normal range is defined when the ultrasonic transducer 203 is attached to the automatic analyzer 101 in a production factory of the automatic analyzer 101, when the automatic analyzer 101 is installed at a customer, when the ultrasonic transducer 203 is replaced, or the like.

### Step 101

When a flow of FIG. 7 is started, in step S101, the controller 116 controls the circuit connection changeover switch 209 of the selection unit 117 such that the ultrasonic transducer 203 is connected thereto, and measures the electrical impedance spectrum 301 by the measurement unit 213. At this time, the electrical impedance spectrum 301 is measured a plurality of times for each of the segments 211 by controlling the segment changeover switch 210 to sequentially switch the segment 211 connected to the controller 116.

### Step S102

In the following step S102, the controller 116 extracts the feature in the normal state for each segment 211 from the electrical impedance spectrum 301 measured in step S101.

### Step S103

In step S103, the controller 116 causes the diagnosis unit 216 to compare the feature extracted in step S102 with an initial determination range stored in advance in the storage unit 215. The initial determination range is a range of the frequency and the impedance value defined on the graph of FIG. 4 similarly to the normal range, and is a preset value empirically or theoretically set in advance for detecting an apparent abnormal state. By the initial determination, it is checked whether there is an initial failure (for example, connector disconnection) in the assembly of the automatic analyzer 101 or the measurement circuit and control including the measurement unit 213.

### Step S104

In step S104, the controller 116 determines whether the feature extracted in step S102 is within the initial determination range, moves the procedure to the definition of the normal range in step S105 when the feature falls within the initial determination range, and moves the procedure to step S107 when the feature is out of the initial determination range.

### Step S105

When the procedure proceeds from step S104 to step S105, the controller 116 defines, by the normal range definition unit 214, the first normal range 403 and the second normal range 404 used for the failure diagnosis for the ultrasonic transducer 203 for each ultrasonic transducer 203 (for each segment 211 in the present embodiment). These defined normal ranges are unique to the system, and are used in each subsequent failure diagnosis (second phase 502) in the same system unless the system is updated due to replacement of the ultrasonic transducer 203 or the like.

### Step S106

In the following step S106, the controller 116 stores the normal range defined in step S105 in the storage unit 215, and ends the flow of FIG. 7. During the subsequent diagnosis for the ultrasonic transducer 203, the normal range corresponding to the ultrasonic transducer 203 to be diagnosed is called out from the storage unit 215.

### Step S107

When the procedure proceeds from step S104 to step S107, the controller 116 outputs, to the display unit 120, an alarm for notifying that an initial failure such as an attachment failure of the ultrasonic transducer 203 is detected, and ends the flow of FIG. 7.

### (Processing Flow in Second Phase)

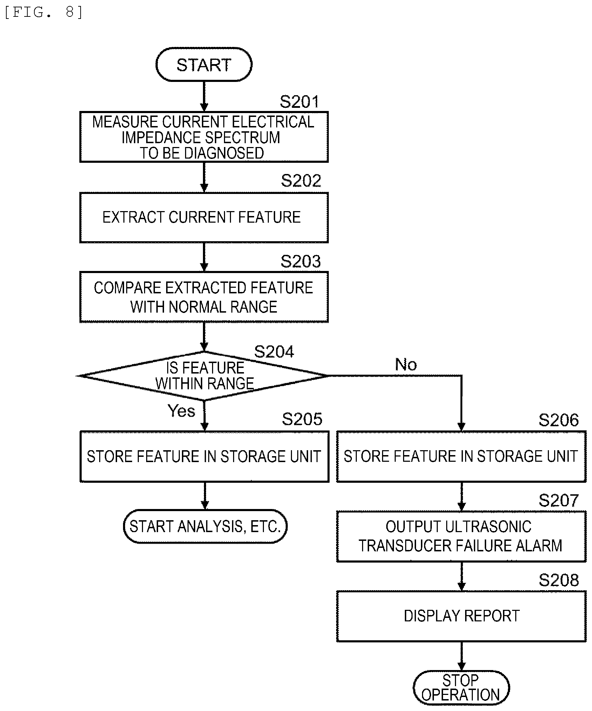

FIG. 8 is a flowchart showing an example of a series of processing procedures of the controller 116 related to the failure diagnosis for the ultrasonic transducer 203 performed in the second phase. The second phase 502 is a situation in which a state of the ultrasonic transducer 203 is diagnosed during an analysis preparation operation performed at the time of starting up the automatic analyzer 101 or before starting analysis of a sample. When it is diagnosed that the ultrasonic transducer 203 is in a failure state in the second phase 502, the automatic analyzer 101 does not perform an analysis operation of the sample and avoids consumption of the sample and the reagent. Alternatively, in a case where the automatic analyzer 101 includes a plurality of ultrasonic mixing mechanisms 114, when it is diagnosed that one ultrasonic transducer 203 is in a failure state, the sequence is switched to in which the ultrasonic mixing mechanism 114 including the ultrasonic transducer 203, in which a failure occurs, is not used as a provisional treatment, and an analysis operation using the remaining ultrasonic transducers 203 is started. Similarly to the definition of the normal range performed in the first phase 501, the controller 116 also performs the failure diagnosis for each ultrasonic transducer 203 and each segment 211.

### Step S201

When a flow of FIG. 8 is started, the controller 116 measures the current electrical impedance spectrum 405 of the ultrasonic transducer 203 to be diagnosed in step S201.

### Step S202

In the following step S202, the controller 116 extracts the feature from the current electrical impedance spectrum 405 of the ultrasonic transducer 203 to be diagnosed.

### Step S203

In step S203, the controller 116 calls the normal range unique to the ultrasonic transducer 203 to be diagnosed from the storage unit 215, and compares the feature extracted in step S202 with the normal range.

### Step S204

In step S204, the controller 116 determines whether the feature extracted in step S202 is within the normal range, moves the procedure to step S205 when the feature falls within the normal range, and moves the procedure to step S206 when the feature is out of the normal range.

### Step S205

When the procedure proceeds from step S204 to step S205, the controller 116 determines that the ultrasonic transducer 203 is normal, stores the feature determined to be normal in the storage unit 215, ends the flow of FIG. 8, continues an operation of the automatic analyzer 101, and proceeds to a procedure for analyzing the sample or the like.

### Step S206

When the procedure proceeds from step S204 to step S206, the controller 116 determines that the ultrasonic transducer 203 is in a failure state, and stores the feature determined to be in the failure state in the storage unit 215.

### Step S207

In the following step S207, the controller 116 outputs, to an output device (for example, the display unit 120), a failure alarm for notifying the user of the ultrasonic transducer 203 determined to be in a failure state.

### Step S208

Further, in step S208, the controller 116 displays a detailed result of the failure diagnosis on the display unit 120, completes the flow of FIG. 8, stops the operation of the automatic analyzer 101, or switches to a sequence in which the ultrasonic transducer 203, in which a failure occurs, is not used, and continues the operation of the automatic analyzer 101.

### (Display of Failure Diagnosis Result)

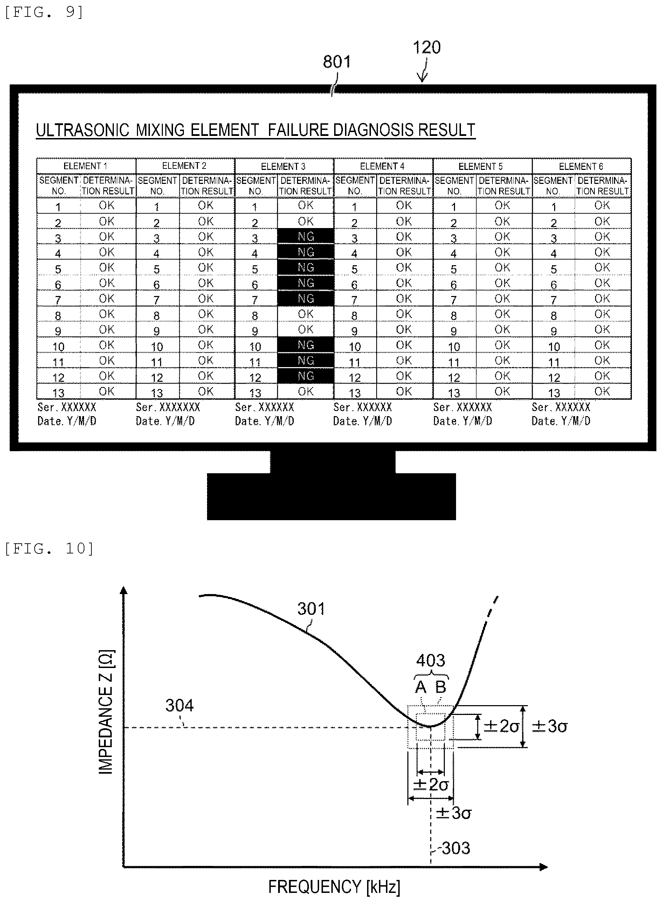

FIG. 9 is an example of diagnosis results of the ultrasonic transducers 203 output by the controller 116 to the display unit 120. FIG. 9 shows an example in which a report 801 of the failure diagnosis for the ultrasonic transducer 203 is displayed for each segment 211. In the report 801, "OK" indicating a normal state or "NG" indicating a failure state is displayed for each of the segments 211 including segments No. 1 to No. 13. FIG. 9 shows an example in which a plurality of ultrasonic transducers 203 are mounted on the automatic analyzer 101. Columns labeled "Element 1", "Element 2", ..., and "Element 6" represent diagnosis results of different ultrasonic transducers 203. The diagnosis result of each segment 211 is displayed for each of the ultrasonic transducers 203. In the example of FIG. 9, the segments No. 3 to No. 7, No. 10 to No. 12 of the "Element 3" are determined to be in a failure state. As shown in FIG. 9, a serial number (Ser) of the ultrasonic transducer 203 and a date (Date) of attachment to the automatic analyzer 101 can also be displayed for each ultrasonic transducer 203 such that an elapsed time after the current normal range is defined for each ultrasonic transducer 203 can be known.

### (Effects)

(1) According to the present embodiment, at the time of the failure diagnosis for the ultrasonic transducer 203, the measurement value of the electrical impedance of the ultrasonic transducer 203 is evaluated by comparing with the unique normal range acquired in advance from the ultrasonic transducer 203 itself to be diagnosed. Therefore, the fluctuation in the measurement value of the electrical impedance caused by the influence factors other than the failure of the ultrasonic transducer 203 is prevented, and the fluctuation in the electrical impedance from the defined normal range can be considered to be mainly caused by a change in the state of the ultrasonic transducer 203. Therefore, erroneous diagnosis in which the normal ultrasonic transducer 203 is determined to be abnormal can be prevented, and reliability in the failure diagnosis for the ultrasonic transducer 203 can be improved. Further, occurrence of originally unnecessary replacement work of the ultrasonic transducer 203 can be prevented, a decrease in an operation rate of the automatic analyzer 101 can be prevented, and occurrence of the number of work steps and component costs required for unnecessary replacement of the ultrasonic transducer 203 can be prevented.

Further, since the normal range of the ultrasonic transducer 203 is defined using the ultrasonic transducer 203, there is also an advantage that a series of preliminary preparations of preparing a large number of normal ultrasonic transducers to generate a normal population for defining the normal range and measuring the individual electrical impedances can be eliminated.

(2) The normal range unique to each ultrasonic transducer 203 includes the first normal range 403 in which the minimum electrical impedance 304 of the ultrasonic transducer 203 and the resonant frequency 303 corresponding thereto are defined as features. In a case of the present embodiment, the normal range unique to each ultrasonic transducer 203 includes the second normal range 404 in which the maximum electrical impedance 402 of the ultrasonic transducer 203 and the anti-resonant frequency 401 corresponding thereto are defined as features. The failure diagnosis that is not affected by the individual difference of the ultrasonic transducer 203, the length of the electrical wiring, or the like can be performed by evaluating the electrical impedance during the diagnosis using the first normal range 403. Further, by evaluating the second normal range 404, a waveform unique to an impedance in which the maximum electrical impedance 402 is obtained at the anti-resonant frequency 401 higher than the resonant frequency 303 can be confirmed. Although there is an abnormality in the ultrasonic transducer 203, it cannot be said that there is no possibility that the feature accidentally falls within the first normal range 403 due to another abnormality in the measurement system such as a short circuit. Regarding this, by evaluating the electrical impedance based on the second normal range 404 at the anti-resonant frequency 401 in addition to the evaluation based on the first normal range 403, the failure of the ultrasonic transducer 203 can be more accurately detected and the reliability in the failure diagnosis for the ultrasonic transducer 203 can be further improved.

(3) As described above, the controller 116 measures the electrical impedance spectrum a plurality of times for each of the segments 211 and each of the ultrasonic transducers 203, extracts the feature for each measured electrical impedance spectrum, and defines the first normal range 403 or the second normal range 404 from a variation in the feature. Accordingly, an appropriate and unique value for each ultrasonic transducer 203 can be set to magnitude of the normal range, specifically, a width between the frequency and the impedance value.

(4) Further, in a case of the ultrasonic transducer 203 including a plurality of electrodes 202 having the same shape, the controller 116 can also define the first normal range 403 or the second normal range 404 from a variation in the feature extracted from the electrical impedance spectrum for each electrode 202 of the ultrasonic transducer 203. In this case, it is not always necessary to measure the electrical impedance a plurality of times, and the first normal range 403 or the second normal range 404 can be defined by one or a few measurements.

### (Modifications)

The invention is not limited to the above embodiment, and may include various modifications. For example, the above embodiment has been described in detail to facilitate understanding of the invention, and the invention is not necessarily limited to those including all the configurations described above. For example, a part of the configuration can be replaced with another configuration. In addition, a part of the configuration of the embodiment may be deleted or another configuration may be added.

For example, in the above embodiment, it is also possible to define the normal range stepwise and determine deterioration of the ultrasonic transducer 203. FIG. 10 is a diagram illustrating a normal range used for the failure diagnosis for the ultrasonic transducer 203 in a modification. As shown in FIG. 10, in this example, the first normal range 403 is divided into a first area A and a second area B including the first area A. Specifically, a lower limit value of a frequency in the first area A is equal to or higher than a lower limit value of a frequency in the second area B, and an upper limit value of the frequency in the first area A is equal to or lower than an upper limit value of the frequency in the second area B. A lower limit value of an impedance in the first area A is equal to or higher than a lower limit value of an impedance in the second area B, and an upper limit value of the impedance in the first area A is equal to or lower than an upper limit value of the impedance in the second area B. Then, an area of the first area A is smaller than an area of the second area B on a graph of FIG. 10. As an example, the second area B can be defined by an average value of a feature obtained by repeated measurements ± 3σ, similarly to the first normal range 403 of FIG. 4, and the first area A can be defined by the average value of the feature ± 2σ.

In this case, when a measurement value of the electrical impedance obtained by applying a voltage to each of the electrodes 202 of the ultrasonic transducer 203 during the failure diagnosis in the second phase 502 is a value within a range of the first area A defined for a corresponding one of the electrodes, the controller 116 diagnoses that the corresponding segment 211 is in a normal state. Further, when the measurement value of the electrical impedance obtained by applying a voltage to each of the electrodes 202 during the diagnosis is a value outside a range of the second area B defined for a corresponding one of the electrodes, the controller 116 diagnoses that the corresponding segment 211 is in a failure state. When the measurement value of the electrical impedance obtained by applying a voltage to each of the electrodes 202 during the diagnosis is a value outside the range of the first area A and within the range of the second area B, the controller 116 diagnoses that a corresponding one of the segments 211 is in a deteriorated state. The deterioration state is, for example, a state in which deterioration has started although the failure state has not been reached at the present time, and there is a possibility of transition to a failure state within a predetermined period.

Such a stepwise definition of the normal range is not limited to the first normal range 403, and can be similarly performed for the second normal range 404.

Further, although an example in which the normal range is defined and the failure diagnosis is performed by the controller 116 has been described above, the essence of the invention is to perform a system of the normal range and the failure diagnosis for the ultrasonic transducer 203 in the same system. In order to realize this, the failure diagnosis for the ultrasonic transducer 203 can also be performed by setting a predetermined normal range from the measurement value of the electrical impedance in the first phase 501 and comparing the electrical impedance measured in the subsequent second phase 502 with the normal range, by a method without using the controller 116.

### Reference Signs List

100 diagnostic system
101 automatic analyzer
116 controller
120 display unit (output device)
201 piezoelectric body
202 electrode
203 ultrasonic transducer
301 electrical impedance spectrum
303 resonant frequency (frequency corresponding to minimum electrical impedance)
304 minimum electrical impedance
401 anti-resonant frequency (frequency corresponding to maximum electrical impedance)
402 maximum electrical impedance
403 first normal range (normal range)
404 second normal range (normal range)
501 first phase (timing when a normal state of ultrasonic transducer is estimated)
A first area
B second area

## Claims

1. An automatic analyzer comprising:
an ultrasonic transducer including a piezoelectric body and an electrode attached to the piezoelectric body; and
a controller configured to perform failure diagnosis for the ultrasonic transducer, wherein
the controller is configured to:
define and store a normal range of an electrical impedance unique to the ultrasonic transducer based on a measurement value of the electrical impedance obtained by applying a voltage to the electrode;
compare the measurement value of the electrical impedance obtained by applying the voltage to the electrode during the diagnosis with the normal range; and
perform the failure diagnosis for the ultrasonic transducer based on the comparison.

2. The automatic analyzer according to claim 1, wherein
the ultrasonic transducer used to define the normal range and the ultrasonic transducer subjected to the failure diagnosis are the same individual.

3. The automatic analyzer according to claim 1, wherein
the normal range is defined based on a feature extracted from a spectrum of the electrical impedance.

4. The automatic analyzer according to claim 3, wherein
the normal range includes a first normal range in which a minimum value of the electrical impedance and a frequency corresponding to the minimum value are defined as the feature.

5. The automatic analyzer according to claim 4, wherein
the normal range includes a second normal range in which a maximum value of the electrical impedance and a frequency corresponding to the maximum value are defined as the feature.

6. The automatic analyzer according to claim 3, wherein
the controller defines the normal range based on a variation in the feature extracted from each of electrical impedance spectra obtained by a plurality of measurements using the electrode.

7. The automatic analyzer according to claim 3, wherein
the ultrasonic transducer includes a plurality of electrodes having the same shape, and
the controller defines the normal range based on a variation in the feature extracted from an electrical impedance spectrum of each of the electrodes.

8. The automatic analyzer according to claim 1, wherein
the normal range of the electrical impedance unique to the ultrasonic transducer is defined based on a measurement value of the electrical impedance obtained at a timing when a normal state of the ultrasonic transducer is estimated.

9. The automatic analyzer according to claim 1, wherein
the normal range is divided into a first area and a second area including the first area, and
the controller is configured to
diagnose that the ultrasonic transducer is in a normal state when the measurement value of the electrical impedance obtained by applying the voltage to the electrode during the diagnosis is a value within a range of the first area,
diagnose that the ultrasonic transducer is in a failure state when the measurement value of the electrical impedance obtained by applying the voltage to the electrode during the diagnosis is a value outside a range of the second area, and
diagnose that the ultrasonic transducer is in a deterioration state when the measurement value of the electrical impedance obtained by applying the voltage to the electrode during the diagnosis is a value outside the range of the first area and within the range of the second area.

10. The automatic analyzer according to claim 1, wherein
the controller outputs an alarm to an output device when diagnosing that a failure occurs in the ultrasonic transducer.

11. A diagnostic system comprising:
a controller configured to perform failure diagnosis for an ultrasonic transducer including a piezoelectric body and an electrode attached to the piezoelectric body, the ultrasonic transducer being provided in an automatic analyzer, wherein
the controller is configured to:
define and store a normal range of an electrical impedance unique to the ultrasonic transducer based on a measurement value of the electrical impedance obtained by applying a voltage to the electrode;
compare the measurement value of the electrical impedance obtained by applying the voltage to the electrode during the diagnosis with the normal range; and
perform the failure diagnosis for the ultrasonic transducer based on the comparison.

12. The diagnostic system according to claim 11, wherein
the controller is provided in the automatic analyzer.

13. A diagnostic method of performing failure diagnosis for an ultrasonic transducer, the ultrasonic transducer including a piezoelectric body and an electrode attached to the piezoelectric body, the ultrasonic transducer being provided in an automatic analyzer, the diagnostic method comprising:
defining a normal range of an electrical impedance unique to the ultrasonic transducer based on a measurement value of the electrical impedance obtained by applying a voltage to the electrode;
comparing the measurement value of the electrical impedance obtained by applying the voltage to the electrode during the diagnosis with the normal range; and
performing the failure diagnosis for the ultrasonic transducer based on the comparison.
